Europäisches Patentamt

(19) European Patent Office

Office européen des brevets

(11) Publication number: **0 150 097**
**A2**

(12) # EUROPEAN PATENT APPLICATION

(21) Application number: **85300281.4**

(22) Date of filing: **16.01.85**

(51) Int. Cl.⁴: **B 29 C 53/06**
**B 26 D 3/06**

(30) Priority: **18.01.84 GB 8401248**

(43) Date of publication of application:
**31.07.85 Bulletin 85/31**

(84) Designated Contracting States:
**AT BE CH DE FR GB IT LI LU NL SE**

(71) Applicant: **Ferry Pickering (Sales) Limited**
**PO BOx 6 Coventry Road**
**Hinckley Leicesterhire(GB)**

(72) Inventor: **Flood, Charles John**
**Ivy Lodge 22 Coventry Road**
**Narborough Leicester(GB)**

(74) Representative: **SERJEANTS**
**25, The Crescent King Street**
**Leicester, LE1 6RX(GB)**

(54) **Folding film sheets.**

(57) A fold line is formed in a semi-rigid PVC or PVA sheet 1 by cutting a groove 17 approximately half-way through the sheet. The cutter comprises a blade or a rotary sawblade or end milling cutter 7 positioned between a pair of idler rollers 13 and projecting beyond the peripheries of the idler rollers by a distance $d$ which is half the sheet thickness. The cutter 7 removes PVC or PVA from the sheet 1 and thereby rapidly and efficiently forms a fold line that has no significant elastic memory sufficient to cause unfolding of, for example, a folding carton formed by folding the sheet.

- 1 -

TITLE

Folding Film Sheets

DESCRIPTION

This invention relates to a method for the creation of fold lines in sheets of homogeneous semi-rigid film material, and to the manufacture of folding cartons using such a method.

In the field of display packaging, folding cartons formed from transparent semi-rigid plastics film are becoming increasingly popular. Suitable films include polyvinyl chloride (PVC) and acetate (PVA) semi-rigid films. The articles to be packaged can be seen clearly through the transparent walls of the carton, which may if desired be printed to add relevant consumer information or to mask out selected portions of the carton for greater presentational effect. The creation of fold lines in plastics film sheets is substantially more difficult than in cardboard and paperboard sheets, which can easily be creased or scored to define the fold lines. Plastics film sheets are not compressible, and cannot simply be stamped with a pattern of fold lines, as can carboard or paperboard. Neither can they satisfactorily be scored using a conventional knife that is moved relative to the sheet. The principal problem is of accuracy of depth control. Because semi-rigid plastics film sheets are generally much thinner than conventional cardboard and paperboard sheets of comparable rigidity, the depth control of the score lines must be far more accurate than is possible with conventional scoring machinery. Too high a score blade can miss the thin sheet altogether, whereas too low a blade can completely sever the sheet.

The elastic memory of such homogeneous semi-rigid plastics film sheets has also always been seen as a problem in the creation of accurate and stable fold lines. The elastic memory of the semi-rigid film material is such that even if a fold were made along a line of weakness, there would be a strong tendency for the material to recover its original planar shape, straightening the fold.

To overcome the above problems it has been the practice to form the fold lines in the plastics material while that material is being heated. The heating may be overall heating of the entire plastics film to above the temperature at which it retains its elastic memory, or it may be localized heating in the zone of the fold lines only. A technique which is the subject of British Patent Specification No. 1,398,727 involves the use of a heated grooving press knife which both subjects the plastics film to localized heating and reduces the thickness of the plastics film sheet along the line of the intended fold. One disadvantage of this method of forming the fold line is that it involves careful control of the temperature of the grooving knife: too low a temperature may result in retention of the elastic memory and creation of too shallow a groove or no groove at all; and too high a temperature may result in severing, by fusion, of the plastics film sheet along the intended fold line.

Another disadvantage of this method of forming the fold line is that it is inherently a slow process. Each press operation to create a fold line involves a dwell time while the heated grooving knife is held in contact with the plastics film sheet, and a cooling time while the sheet is allowed to cool. A further disadvantage is that the process is inherently wasteful of energy, involving as it does the successive heating and cooling of at least a portion of the film sheet.

Another technique for forming the fold lines has been proposed in British Patent Specification No. 1,507,786. This is a very similar process to that discussed above except that it uses a highfrequency electric field to heat and partially to melt the plastics film sheet. This latter process is subject to generally the same disadvantages as those discussed above with reference to the former.

The invention provides a method of forming a fold line in a semi-rigid sheet of homogeneous plastics resin material, which comprises feeding the sheet past a workstation at which a frame which is movable transversely to the plane of the sheet is biased towards the sheet to bring a pair of spaced coaxial rollers carried by the frame into firm contact with the upper face of the sheet, so that a cutting member which is mounted on the frame between the rollers and which extends beyond the peripheries of the rollers for a precise

0150097

- 5 -

radial distance $\underline{d}$ cuts a groove partially into the sheet to a depth defined by the distance $\underline{d}$. The method overcomes the disadvantages discussed above in that it requires no temperature control, in that the cutting member operates at ambient temperature; it requires no dwell time, since the film sheet can be fed continuously past one or more similar workstations; and it is energy-efficient. The method has the further advantage, however, that the depth of groove can be controlled with very great accuracy. This is a direct consequence of the use of the spaced, preferably closely spaced, rollers on the frame, which contact the top face of the film sheet immediately adjacent the cutting member so as accurately to define the depth of the groove being cut. Advantageously this depth is about half the thickness of the film sheet, and the groove so formed may be of any suitable section.

The sheet of film material may be moved past one or more laterally spaced such workstations in one or more passes, as required. If desired the frames and cutting members may be raised and lowered during the feeding of the sheet so as to produce intermittent grooving, and if desired individual sheets of film may be moved in more than one direction to produce grooves or sets of grooves which are offset one from the other at an angle, generally 90°.

The cutting member may be a knife, a free--rotating rotary blade or a powered rotary blade as desired. Alternatively it may be a milling cutter. The spaced coaxial rollers may be driven to provide or assist the motive force feeding the sheet past the workstation, or they may be idler rollers. Preferably they are idler rollers, with the sheet feed being provided by other rollers or by grippers.

If the cutting member is a milling cutter, it may be an end milling cutter or a side milling cutter, the ultimate choice depending on the characteristics of the resin material of the film sheet and the ease of removal of the waste material. A side milling cutter preferably has its rotary blade mounted on the same axis as the rollers which are advantageously idler rollers, but is driven at a peripheral speed exceeding that of the sheet material being fed. Such a cutter may have a set to its teeth, in the manner of a sawblade, to facilitate the removal of the waste from the groove being milled in the film sheet. An end milling cutter, if used, has the advantage of being adjustable in the depth of the groove being milled.

DRAWINGS

Figure 1 is a schematic perspective view of a side milling cutter cutting a groove in a film sheet according to the invention;

Figure 2 is an enlarged detail of an elevation of the milling cutter and film sheet of Figure 1, viewed longitudinally of the groove;

Figure 3 is an elevation similar to that of Figure 2 of an alternative milling cutter that may be used according to the invention; and

Figure 4 is an end elevation of a workstation in which the cutting element is a rotary blade.

In the drawings the same reference numerals have been used where possible to designate the same items or items having an equivalent function, to facilitate comparison of the three illustrated embodiments of the invention.

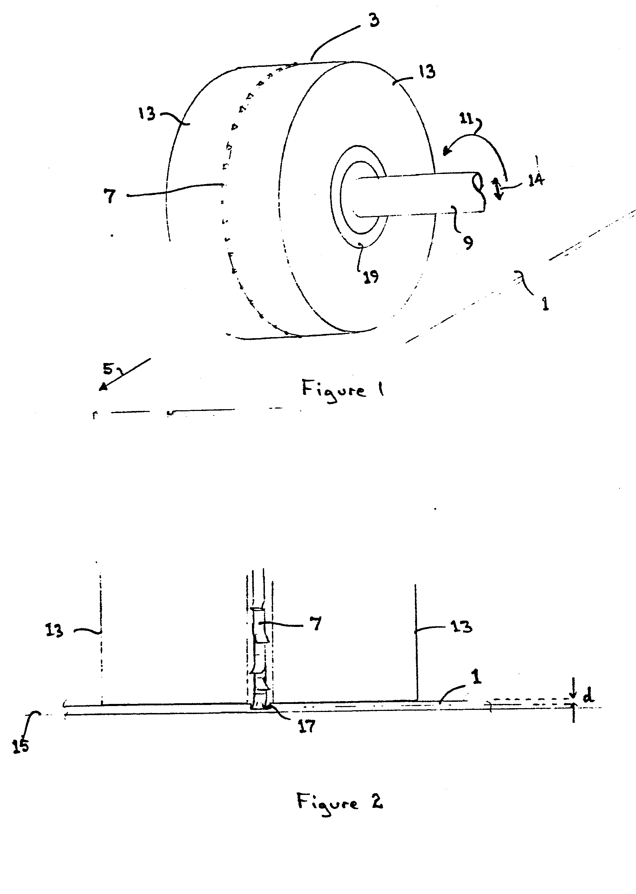

In Figure 1, a semi-rigid film PVC sheet 1 is shown being fed past a rotating milling cutter 3 in the direction of an arrow 5. Typically the feeding would be under the guidance of pressure rollers or grippers (not shown) capable of advancing the sheet 1 in a precise linear path.

The milling cutter 3 comprises a powered rotary sawblade 7 driven by a spindle 9 in the direction of the arrow 11. A frame mounting the milling cutter 3 and a pair of coaxial idler rollers 13 is not shown in Figures 1 and 2 but is biased downwardly against the sheet 1 in the direction of the arrow 14. The idler rollers 13 are closely adjacent the sawblade 7. The sawteeth, shown enlarged in Figure 2, project radially beyond the circumference of the pair of idler rollers 13 by an amount $d$ equal to approximately half the thickness of the film. Thus when the milling cutter 3 is biased downwardly against the sheet 1, trapping the sheet 1 between the idler rollers 13 and a table 15, the maximum depth of the groove 17 cut by the sawblade 7 is determined by the amount $d$.

The mounting of the idler rollers 13 on the spindle 9 may be by any suitable means, such as by ball bearings in bearing races 19 as shown in Figure 1.

In the method of the invention, the film sheet 1 is passed continuously and in a straight line beneath the milling cutter 3. The idler rollers 13 simply roll over the surface of the film sheet 1 while the rotating sawblade 7 cuts the groove 17 which subsequently defines a fold line in the film sheet 1. A number of parallel grooves 17 can if desired be formed by multiple sawblades 7 in a single pass, and non-parallel grooves 17 can be formed by passing the sheet in another direction through a subsequent but similar workstation.

It has been found that total removal of an appreciable amount of the plastics film to form the grooves 17 is sufficient to overcome all problems associated with elastic memory in the film sheet 1. It is not necessary to heat the film sheet 1 to provide a clean and stable fold line, and cartons made by folding a film sheet along the fold lines formed as in Figures 1 and 2 show no tendency to open and flatten in use.

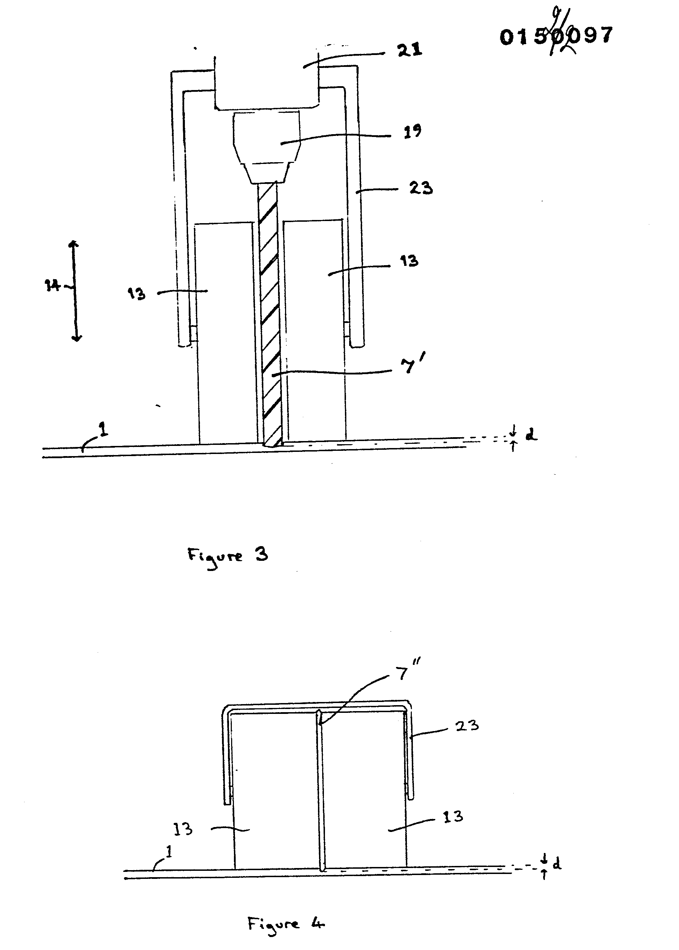

The sawblade 7 of Figure 1 and 2 is a side milling cutter. In contrast, the milling cutter 7' of Figure 3 is an end milling cutter which cuts a groove 17' with, in this example, a tapered base. The cutter 7' is shown as being mounted in a vertical chuck 19, and the two idler rollers 13 are mounted on a mounting frame 23 incorporating a motor unit 21 driving the chuck 19. The maximum depth of the groove 17' is precisely defined by the distance $d$ which the cutter 7' extends beyond the peripheries of the idler rollers 13.

The embodiment of Figure 4 illustrates that the cutting element between the rollers 13 may be a blade rather than a milling cutter. Figure 4 illustrates this blade as being a rotary blade 7" mounted on the same shaft as the rollers 13 and rotatable therewith. Alternatively the blade 7" could be non-rotary and mounted on the frame 23 to lie between the rollers and extend beyond the peripheries of the rollers for the depth $d$. This latter construction enables the depth $d$ to be adjustable to accommodate different thicknesses of sheet 1.

**0150097**

CLAIMS

1.    A method of forming a fold line in a semi-rigid sheet of homogeneous plastics resin material, which comprises feeding the sheet past a workstation at which a frame which is movable transversely to the plane of the sheet is biased towards the sheet to bring a pair of spaced coaxial rollers carried by the frame into firm contact with the upper face of the sheet, so that a cutting member which is mounted on the frame between the rollers and which extends beyond the peripheries of the rollers for a precise radial distance $d$ cuts a groove partially into the sheet to a depth defined by the distance $d$.

2.    A method according to claim 1, wherein the plastics resin material is polyvinyl chloride or polyvinyl acetate.

3.    A method according to claim 1 or claim 2, wherein the groove is cut to a depth of about half the thickness of the film sheet.

4.    A method according to any preceding claim, wherein the cutting member is a milling cutter.

5. A method according to claim 4, wherein the milling cutter is a side milling cutter.

6. A method according to claim 4, wherein the milling cutter is an end milling cutter.

7. A method of forming a fold line in a semi-rigid sheet of homogeneous plastics material, substantially as described herein with reference to the drawings.

8. A method of forming a folding carton from a semi-rigid sheet of homogeneous plastics material, which comprises forming a number of fold lines according to any preceding claim in the sheet and folding the sheet along the fold lines to form an erected carton.

0150097

Figure 1

Figure 2

Figure 3

Figure 4